# EUROPÄISCHE PATENTSCHRIFT

(11) **EP 0 428 829 B1**
(45) Veröffentlichungstag und Bekanntmachung des Hinweises auf die Patenterteilung: **10.11.1993**
(21) Anmeldenummer: 90114996.3
(22) Anmeldetag: 04.08.1990
(51) Int. Cl.: A47C 21/08, A47C 19/20, B62D 33/06

(54) **Fahrerhaus-Schlafliege-Herausfallsicherung**
Restraining structure for a vehicle bunk bed
Barrière latérale pour lit de cabines de camions

(30) Priorität: 07.09.1989 DE 3929785
(43) Veröffentlichungstag der Anmeldung: 29.05.1991
(73) Patentinhaber: MAN Nutzfahrzeuge Aktiengesellschaft, 80976 München (DE)
(72) Erfinder: Watzek, Gerhard, D-8000 München 45 (DE); Dostal, Vilem, D-8028 Taufkirchen (DE)

(56) Entgegenhaltungen:
- GB-A- 2 155 778
- US-A- 2 839 765
- US-A- 3 000 665
- US-A- 3 695 698
- US-A- 4 217 670

## Beschreibung

Die Erfindung bezieht sich auf Schlafliegen im Fahrerhaus eines Nutzfahrzeuges, insbesondere Lkw, mit einer an der unteren Schlafliege in ihrem Frontbereich angeordneten, ein- und ausschwenkbaren Einrichtung, die sich im eingeschwenkten Zustand in etwa in der Ebene der unteren Schlafliegendicke befindet und im ausgeschwenkten Zustand eine Herausfallsicherung bildet.

Es ist eine Schlafliege mit einer ein- und ausschwenkbaren Einrichtung nach der US-A-4, 217, 670 bekannt, wobei die Einrichtung im ausgeschwenkten Zustand als Herausfallsicherung dient. Weiterhin ist eine Schlafliegenanordnung mit einer unteren und einer oberen Schlafliege nach der US-A-2, 839, 765 bekannt, wobei für die untere Schlafliege eine Herausfallsicherung und für die obere Schlafliege eine separate Leiter vorgesehen sind.

Indem der Ladebereich der Lkw auf Kosten der Fahrerhauslänge zunehmend vergrößert wird, ergeben sich Probleme für die Anordnung der Liegen.

Der Erfindung liegt die Aufgabe zugrunde, auch unter dem Gesichtspunkt ungünstiger Platzverhältnisse, Gefahren bei der Benutzung der Liegen zu vermeiden.

Dies wird erfindungsgemäß dadurch erreicht, daß die ein- und ausschwenkbare Einrichtung in Doppelfunktion als Herausfallsicherung für die untere Schlafliege und als Auf- und Abstiegsleiter für die obere Schlafliege ausgebildet ist. Solcherart wird sowohl mit geringen Kosten, und geringem räumlichen Aufwand ein bequemes Besteigen der oberen Liege ermöglicht, wie auch mit der gleichen Einrichtung die die untere Liege benutzende Person gegen Herausfallen und damit gegen Unfall gesichert ist. In einer speziellen Ausgestaltung der Erfindung ist die Einrichtung mit zwei ortsfesten Fußteilen an der unteren Schlafliege befestigt, wobei an den Fußteilen in entsprechenden Drehpunkten zwei Lenkerdrehbargelagert sind und die Lenker über zwei im Abstand zueinander angeordnete Koppeln in den entsprechenden Drehpunkten miteinander verbunden sind. Auf diese Weise entsteht eine scherenförmig kinematische Einrichtung, die auf geringstem Raumbedarf ineinander verklappbar ist, so daß den geringen Platzverhältnissen im Fahrerhaus Rechnung getragen wird. Nach einem weiteren Merkmal der Erfindung sind an einem Lenker innenseitig eine Arretierung und im Abstand davon außenseitig ein Handgriff vorgesehen. Diese Anordnung ist in sinnvoller Weise so gewählt, um die die Leiter einschwenkende Person dazu zu zwingen, beide Hände zu benutzen, um so einer Einklemmgefahr einer Hand vorzubeugen.

Die Erfindung ist in einem Ausführungsbeispiel dargestellt.

Es zeigen:
- Fig. 1: eine Vorderansicht der erfindungsgemäßen Einrichtung im ausgeschwenkten Zustand,
- Fig. 2: die erfindungsgemäße Einrichtung in der Draufsicht, und
- Fig. 3: die erfindungsgemäße Einrichtung in Vorderansicht im eingeschwenkten Zustand.

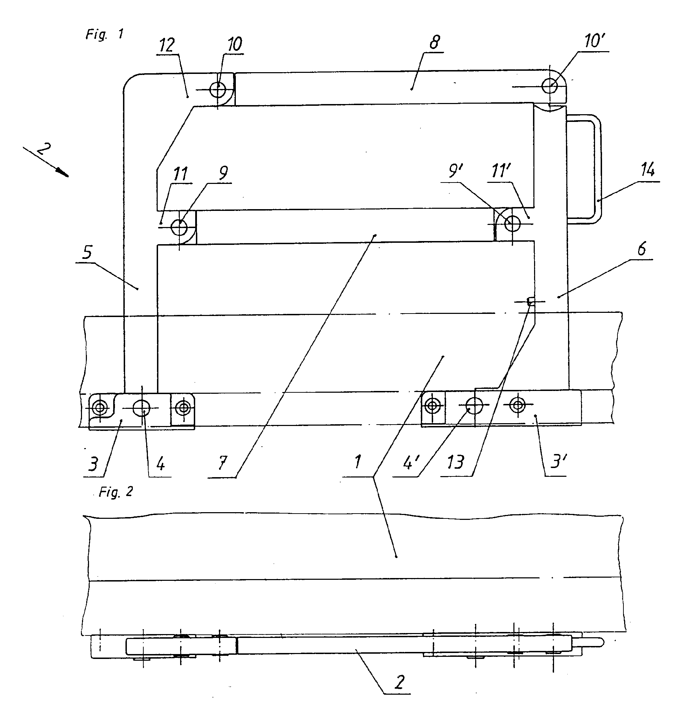

Fig. 1 zeigt eine untere Schlafliege 1, an der im unteren Bereich die Fußstücke 3 und 3' der ein- und ausschwenkbaren Vorrichtung 2 fest angebracht sind. In den Drehpunkten 4 und 4' sind die Lenker 5 und 6 drehbar gelagert. An den Lenkern 5 und 6 sind an ihren Auslegern 11, 11' und 12 Koppeln 7 und 8 angeordnet, die in den Drehpunkten 9, 9'; 10, 10' drehbar gelagert sind. Innenseitig des Lenkers 6 ist im unteren Bereich eine Arretierung 13 zu ersehen, die in ihrer Ausführung nicht näher dargestellt ist. Außenseitig des Lenkers 6 ist im oberen Bereich ein Handgriff 14 vorgesehen.

Die beiden Betätigungselemente sind mit Absicht auseinandergelegt, damit beim Einklappen der Vorrichtung der die Vorrichtung bedienende Fahrer oder Beifahrer dazu gezwungen ist, beide Hände zu benutzen, um somit der Gefahr vorzubeugen, daß er eine Hand in die Trittstufen steckt und der Gefahr einer Quetschung unterliegt.

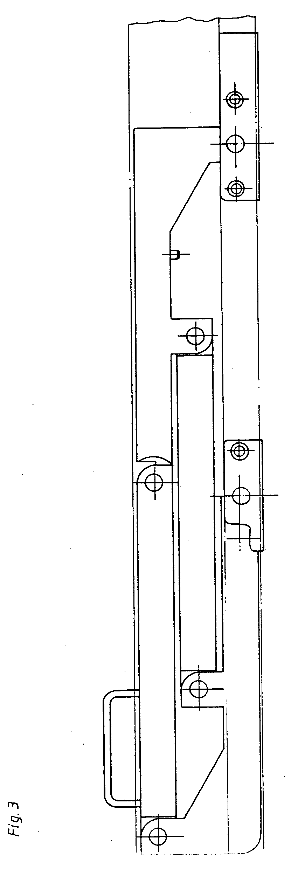

Fig. 2 zeigt eine Draufsicht der unteren Schlafliege 1 mit der vor ihrer äußeren Begrenzung angeordneten ein- und ausschwenkbaren Vorrichtung 2. Hieraus ist auch der besondere Vorteil der Erfindung zu sehen, in dem die Einrichtung 2 einen nur sehr geringen Raum in der Breitenerstreckung der Schlafliege einnimmt. Aus Fig. 3 ist ersichtlich, wie die ein- und ausschwenkbare Vorrichtung 2 durch Ineinanderschachtelung ihrer Elemente nach dem Schereneffekt sehr wenig Platz, d.h., nur die Dicke der Schlafliege in Anspruch nimmt.

### Bezugszeichenliste

- 1: untere Schlafliege
- 2: ein- und ausschwenkbare Vorrichtung
- 3, 3': Fußteile
- 4, 4': Drehpunkte an 3, 3'
- 5: Lenker
- 6: Lenker
- 7: Koppel
- 8: Koppel
- 9, 9': Drehpunkte Lenker/Koppel an 11, 11' und 7
- 10, 10': Drehpunkte Lenker/Koppel an 12, 6 und 8
- 11, 11': Ausleger an 5, 6
- 12: Ausleger an 5
- 13: Arretierung
- 14: Handgriff

## Patentansprüche

1. Schlafliegen im Fahrerhaus eines Nutzfahrzeuges, insbesondere Lkw, mit einer an der unteren Schlafliege (1) in ihrem Frontbereich angeordneten, ein- und ausschwenkbaren Einrichtung (2), die sich im eingeschwenkten Zustand in etwa in der Ebene der unteren Schlafliegedicke befindet und im ausgeschwenkten Zustand eine Herausfallsicherung bildet, dadurch gekennzeichnet, daß die ein- und ausschwenkbare Einrichtung (2) in Doppelfunktion als Herausfallsicherung für die untere Schlafliege (1) und als Auf- und Abstiegsleiter für die obere Schlafliege ausgebildet ist.

2. Schlafliegen nach Anspruch 1, dadurch gekennzeichnet, daß die Einrichtung (2) mit zwei ortsfesten Fußteilen (3, 3') an der unteren Schlafliege (1) befestigt ist, an den Fußteilen (3, 3') in den Drehpunkten (4, 4') Lenker (5, 6) drehbar gelagert sind und die Lenker (5, 6) über zwei im Abstand zueinander angeordnete Koppeln (7, 8) in den Drehpunkten (9, 9'; 10, 10') miteinander verbunden sind.

3. Schlafliegen nach Anspruch 1 oder 2, dadurch gekennzeichnet, daß die Lenker (5, 6) innenseitig kurze Ausleger (11, 11', 12) aufweisen, an denen die Koppeln (7, 8) drehbar gelagert sind, wobei die Ausleger (11, 11', 12) an ihren freien Enden in einem 90°-Sektor gerundet sind und die Rundungen an den zu der Koppel (7) gehörigen Auslegern (11, 11') gegensinnig verlaufen.

4. Schlafliegen nach den Ansprüchen 1 bis 3, dadurch gekennzeichnet, daß am Lenker (6) innenseitig eine Arretierung (13) und im Abstand davon außenseitig ein Handgriff (14) vorgesehen sind.

## Claims

1. Bunks in the cab of a commercial vehicle, particularly a truck, with a device to slew in and out (2) mounted on the front of the lower bunk (1), which device, when slewed in, is approximately at the level of the lower bunk thickness, and, when slewed out, is a safety precaution against falls from the bunk, characterised in that said device (2) has the double function of a safety precaution for the lower bunk (1) against falls from the bunk and as ladder providing access to and from the upper bunk.

2. Bunks as under Claim 1, characterised in that the device (2) is attached to the lower bunk (1) by means of two stationary foot parts (3, 3'), that guides (5, 6) are swivel-mounted on the foot parts (3 ,3') in the pivots (4, 4') and that the guides (5, 6) are connected with each other in the pivots (9, 9'; 10, 10') via two couplers (7, 8) located at a distance relative to each other.

3. Bunks as under Claim 1 or 2, characterised in that the guides (5, 6) have short arms (11, 11', 12) on their inner side, on which arms the couplers (7, 8) are swivel-mounted, the arms (11, 11', 12) being rounded at their free ends in a 90° sector and the roundings on the arms (11, 11') of the coupler (7) run in opposite directions.

4. Bunks as under one of the Claims 1 to 3, characterised in that the guide (6) has on its inner side a locking device (13) and, at a distance to this, a handle (14) mounted on the outer side.

## Revendications

1. Couchette pour cabine de véhicule utilitaire notamment de camion, comportant un dispositif dépliable et repliable (2) prévu dans la zone frontale de la couchette avant (1), ce dispositif se trouvant à l'état replié, sensiblement dans le plan de l'épaisseur de la couchette inférieure et ce dispositif, à l'état déplié, constitue une barrière de protection contre les chutes, caractérisée en ce que le dispositif dépliable et repliable (2) a une double fonction de barrière de protection contre les chutes pour la couchette inférieure (1) et comme échelle d'accès pour la couchette supérieure.

2. Couchette selon la revendication 1, caractérisée en ce que le dispositif (2) est fixé à la couchette inférieure (1) par deux pieds fixes (3, 3') sur des points de rotation (4, 4') des bras (5, 6) et les bras (5, 6) sont reliés par des traverses (7, 8) écartées, fixées aux points de rotation (9, 9' ; 10, 10').

3. Couchette selon la revendication 1 ou 2, caractérisée en ce que les bras (5, 6) comportent sur leur côté intérieur de courtes pattes (11, 11', 12) sur lesquelles sont articulées les traverses (7, 8), les pattes (11, 11', 12) étant arrondies sur un secteur de 90° à leur extrémité libre et les arrondis sont tournés l'un vers l'autre pour les pattes (11, 11') associées à la traverse (7).

4. Couchette selon les revendications 1 à 3, caractérisée en ce que le bras (6) comporte d'un côté un blocage (13) et à une certaine distance de celui-ci, à l'extérieur, une poignée (14).
